# EUROPÄISCHE PATENTSCHRIFT

(11) **EP 1 092 494 B1**
(45) Veröffentlichungstag und Bekanntmachung des Hinweises auf die Patenterteilung: **30.11.2005**
(21) Anmeldenummer: 00120379.3
(22) Anmeldetag: 18.09.2000
(51) Int. Cl.: B23B 49/02, B23B 47/28, B23Q 11/00

(54) **Bohreinrichtung zum Erzeugen von Bohrungen insbesondere in überlappenden Bauteilen und Verfahren hierzu**
Drilling method and apparatus for producing holes through overlapping elements
Dispositif et procédé de forage pour produire des percages en particulier dans des éléments se chevauchant

(30) Priorität: 14.10.1999 DE 19949673; 28.01.2000 DE 10003647
(43) Veröffentlichungstag der Anmeldung: 18.04.2001
(73) Patentinhaber: Airbus Deutschland GmbH, 21129 Hamburg (DE)
(72) Erfinder: Ende, Wolfgang, Dipl.-Ing., 21629 Neu Wulmstorf (DE); Schüler, Harald, Dipl.-Ing., 21129 Hamburg (DE)
(74) Vertreter: Hansmann, Dierk

(56) Entgegenhaltungen:
- US-A- 3 776 647
- US-A- 4 209 069
- US-A- 4 969 781

## Beschreibung

Die Erfindung betrifft die Verwendung einer Bohreinrichtung zum Anschluß an eine Bohrmaschine mit einem Bohrwerkzeug für das Erzeugen von Bohrungen in überlappenden Bauteilen sowie ein Verfahren hierzu.

Im Flugzeugbau erfolgt die Montage von Strukturbauteilen üblicherweise durch das Einlegen der Bauteile in konturgebende Vorrichtungen. In die sich überlappenden Fügeflächen der Bauteile, werden Bohrungen, die beispielsweise im Bauteil mit kritischem Randabstand vorhanden sind, durch Abbohren auf das Bauteil ohne Bohrungen übertragen. Beispielsweise erfolgt die Querstoßmontage für einen Flugzeugrumpf in der Weise, daß zwei Großbauteile zusammengefahren werden und dabei das erste Bauteil mit einem äußeren Umfang über die innenliegende Querstoßlasche vom zweiten Bauteil geschoben wird. Zum Fügen des Überlappungsbereiches müssen eine Vielzahl von Nietbohrungen hergestellt werden. Um Versetzungen zwischen den zueinander gehörenden Bohrungen im ersten bzw. im zweiten Bauteil zu verhindern, erfolgt ein Abbohren von sogenannten Pilotbohrungen (Vorbohrungen), die im ersten Bauteil bereits vorhanden sind und anhand dessen die Nietlochbohrungen im zweiten Bauteil hergestellt werden. Entsprechend dem Arbeitsfortschritt beim Abbohren werden teilweise die fertiggestellten Bohrungen mit Schraubheftern geheftet. Nach Fertigstellung aller Bohrungen entlang der Fügefläche der Bauteile müssen die Bohrspäne, die während des Abbohrvorganges entstehen und sich zu einem großen Teil zwischen den Bauteilen in den Fügeflächen ansammeln, entfernt werden. Dieses geschieht durch Auseinanderfahren der Bauteile sowie durch Entgraten und Reinigen der Fügebereiche. Speziell in der Flugzeugrumpfmontage ist es notwendig, diese Bereiche auch noch mit einer Dichtmasse zu versehen. Nach diesem Arbeitsschritt werden das erste und zweite Bauteil wieder in die Endposition zusammengefahren. In etwa die Hälfte aller Nietbohrungen werden Heftniete gesetzt und nunmehr können die restlichen Bohrungen auf Fertigmaß gebohrt, gesenkt, auf der Bohreraustrittsseite entgratet und die Paßniete gesetzt werden. Die Heftniete werden danach ausgebohrt und auch diese Bohrungen werden auf Fertigmaß gebohrt und zur Aufnahme von Paßnieten vorbereitet. Bei der großen Anzahl von Nietbohrungen, die für die Flugzeugrumpfmontage - speziell die Quernahtmontage - notwendig sind, ist dieser Montageablauf sehr arbeitsintensiv, da nach dem Herstellen der Bohrungen die Bauteile wieder auseinandergefahren und die zwischen den Bauteilen in den Fügeflächen angesammelten Bohrspäne entfernt werden müssen. Dafür sind die Fügeflächen zu entgraten und zu reinigen. Auch sind Positionierungsungenauigkeiten durch das Auseinander- und wieder Zusammenfahren der Bauteile möglich, die nur mit erheblichem Aufwand wieder behoben werden können.

Der Erfindung liegt daher die Aufgabe zugrunde, eine Verwendung einer Bohreinrichtung sowie ein Verfahren der eingangs genannten Art zur Verfügung zu stellen, welches den Zeitaufwand bei der Herstellung von Bauteilen mit überlappenden Fügeflächen, insbesondere bei einer Vielzahl von Nietlochbohrungen und herzustellenden Nietverbindungen, erheblich senkt. Es sind für die Fertigung von überlappenden Fügeflächen an Bauteilen, beispielsweise bei der Quernahtmontage eines Flugzeugrumpfes die Durchlaufzeiten zu reduzieren.

Die Aufgabe wird durch die im Patentanspruch 1 bzw. 11 angegebenen Maßnahmen gelöst.

Dabei ist insbesondere von Vorteil, daß sich keine Bohrspäne bzw. kein Staub und Faserreste in der Fügefläche zwischen den Bauteilen ansammeln können. Damit kann das Auseinanderfahren, Entgraten, Reinigen, Zusammenfahren und Heften der Bauteile nach dem Abbohren der Heftbohrungen entfallen.
Die Anzahl der Fügearbeitsgänge in der Strukturmontage, insbesondere bei der Quernahtmontage eines Flugzeugrumpfes, kann deutlich reduziert werden. Dieses ermöglicht kürzere Fertigungs - und Durchlaufzeiten bei der Bauteilherstellung.

In der Bohreinrichtung integriert ist eine Absaugung, die einen Spänestau in der Bohreinrichtung verhindert.

Weiterbildungen und vorteilhafte Ausgestaltungen sind in den Unteransprüchen 2 bis 10 und 12 angegeben.

Zur Erzeugung einer vorbestimmbaren Andrückkraft und einer Wirkverbindung zwischen der äußeren und der inneren Hülse sind als einfache und billige Ausführung federbelastete Führungsbolzen vorgesehen. Alternativ dazu ist eine in das bohrmaschinenseitige Element integrierte Spiralfeder möglich, die raumsparend und verschmutzungsunempfindlich zwischen dem bauteilseitigen und dem bohrmaschinenseitigen Element eine Relativbewegung ermöglicht.

Durch die Zufuhr von Luft zur Bohrstelle und der Gestaltung der geschlitzten bzw. gelochten Andrückhülse, deren Mantelfläche sich im Bereich des Schlitzes überlappt, ist eine Luftzirkulation zum axialen Spänetransport vorhanden ohne das dabei die Späne in radialer Richtung aus der Hülse austreten können.
Zur Unterstützung der Luftzirkulation befinden sich als vorteilhafte Weiterbildung Bypaßbohrungen im konischen Teil der bauteilseitigen Hülse.
Im Bereich der Bohrstelle in Richtung Absaugrohr befindet sich ein definierter Luftkanal, der dem Querschnitt des Absaugrohres angepaßt ist, um den sogenannten Zyklon - Effekt zu verhindern (Senkung der Strömungsgeschwindigkeit der Luft, Ausfällen der Späne).

Zur Verwendung der Bohreinrichtung als Vorsatz zu einer üblichen Bohrmaschine sind entweder eine Gewindeaufnahme oder ein Aufnahmeteil vorgesehen, die eine sichere Fixierung und Verdrehsicherung realisieren.

In der Zeichnung sind Ausführungsbeispiele der Erfindung dargestellt, das nachstehend anhand der Figuren 1 bis 7 näher beschrieben werden. In den Figuren sind gleiche Bauteile mit gleichen Bezugszeichen versehen.

Es zeigt
- Fig. 1: eine erfindungsgemäß verwendete Bohreinrichtung in zwei Ansichten als Bestandteil einer Bohrvorrichtung,
- Fig. 2: die erfindungsgemäß verwendete Bohreinrichtung in Einzelheiten,
- Fig. 3: eine erste Ausgestaltung einer Andrückhülse,
- Fig. 4: eine zweite Ausgestaltung einer Andrückhülse als Bestandteil einer erfindungsgemäß verwendeten Bohreinrichtung,
- Fig. 5: die erfindungsgemäß verwendete Bohreinrichtung in Arbeitsposition,
- Fig. 6: eine zweite Ausführungsform der erfindungsgemäß verwendeten Bohreinrichtung in Einzelheiten und
- Fig. 7: die zweite Ausführungsform der Bohreinrichtung in Arbeitsposition.

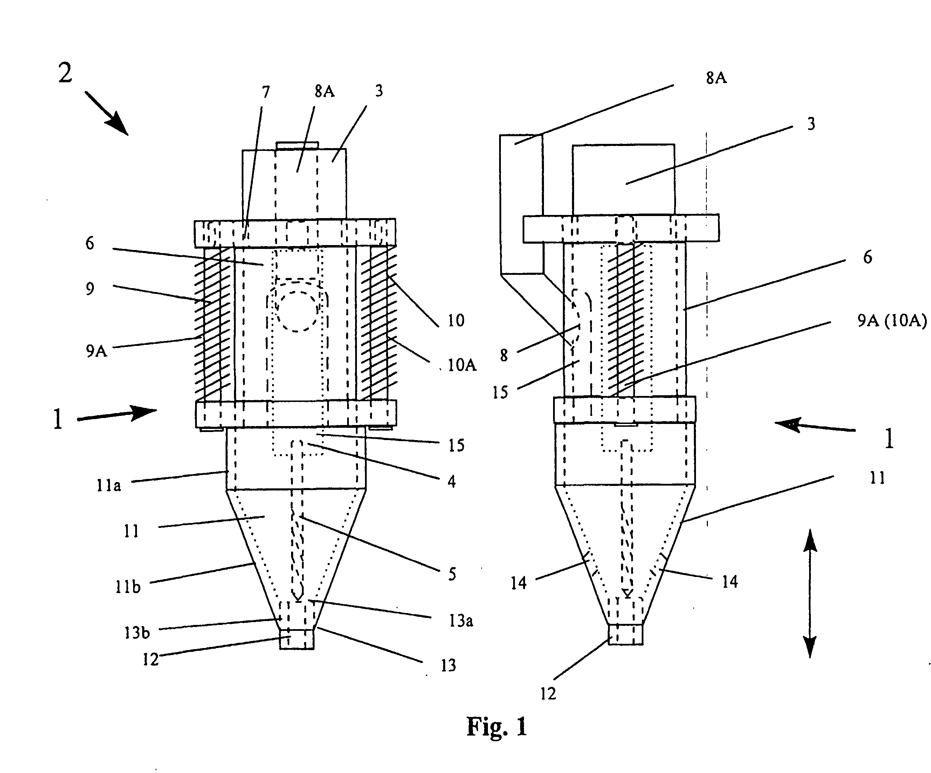

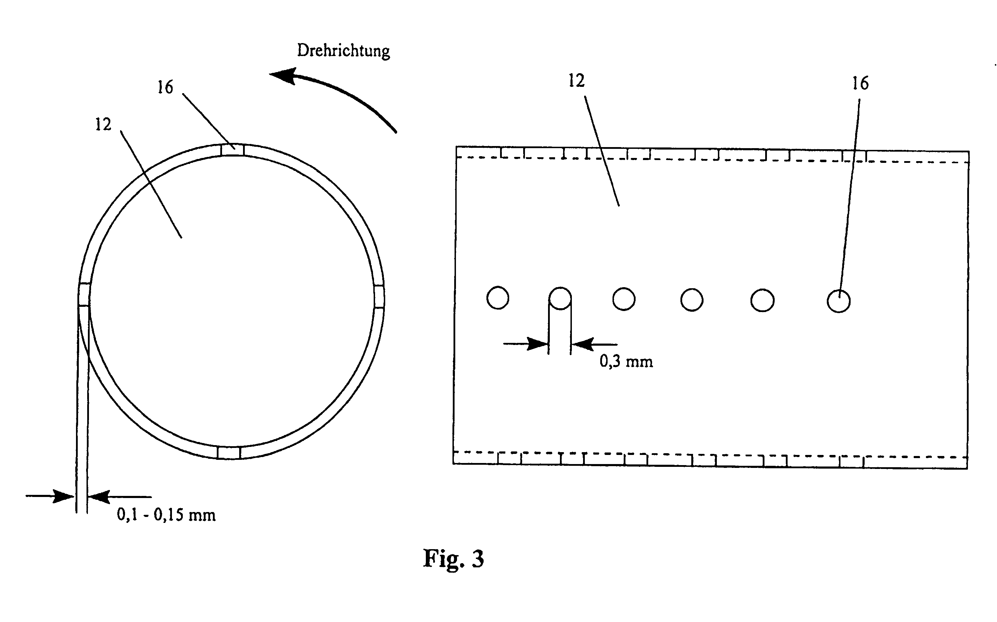

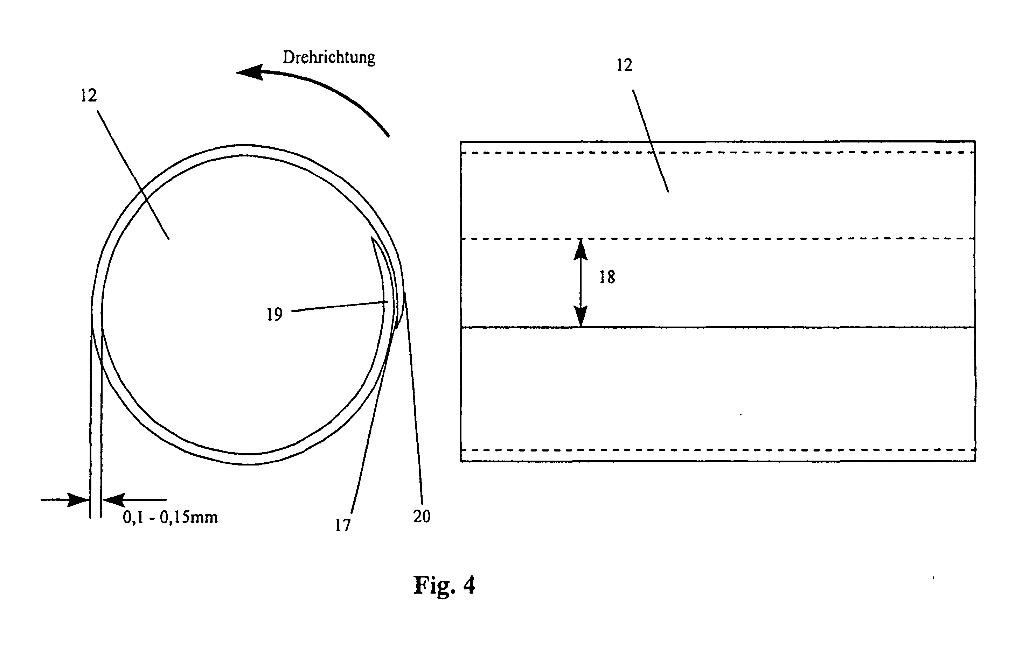

In der Fig. 1 ist in zwei Ansichten eine Bohreinrichtung 1 dargestellt, welches Teil eines Bohrvorrichtung 2 ist. Zur Bohrvorrichtung 2 gehört neben der erfindungsgemäß verwendeten Bohreinrichtung 1 eine üblicherweise bekannte Bohrmaschine 3, auf die die Bohreinrichtung 1 aufgesetzt und befestigt werden kann. Die Bohreinrichtung 1 weist eine feststehende Innenhülse 6 auf, die im Anschlußbereich an die Bohrmaschine 3 eine Gewindeaufnahme 7 umfaßt und mittels der die Bohreinrichtung 1 an das Vorderteil der Bohrmaschine 3 angeschraubt werden kann. Im Hohlraum der Innenhülse 6 ist ausreichend Platz für die Aufnahme des Futters 4 und des Bohrers 5 der Bohrmaschine 3. An der Innenhülse 6 ist weiterhin eine Späneabsaugung 8 angeordnet, die während des Bohrvorganges Bohrspäne oder Staub und Faserreste von der Bohrerspitze weg in axialer Richtung in Richtung Absaugrohr 8A transportiert. Über federbelastete Führungsbolzen 9 und 10 ist eine bewegliche Außenhülse 11 mit der Innenhülse 6 in Wirkverbindung, so daß eine Relativbewegung zwischen der Außenhülse 11 und der Bohrmaschine 3 mit daran befestigter Innenhülse 6 in Bohrvorschubrichtung (siehe Pfeil) ermöglicht ist. Die Außenhülse 11 weist ein zylindrisch geformtes hinteres Hülsenteil 11a auf, in dem die Innenhülse 6 relativ bewegt werden kann. Das konisch geformte vordere Hülsenteil 11b bildet im Endbereich eine Aufnahme 13 für eine Andrückhülse 12. Die Aufnahme 13 umfaßt einen inneren Anschlag 13a und ein Halteteil 13b, wobei die Andrückhülse 12 in die Aufnahme 13 einschiebbar ist und in Längsrichtung durch den inneren Anschlag 13b gehalten wird. Die Andrückhülse 12 ist somit leicht austauschbar und kann ohne aufwendige Montagearbeiten gewechselt werden. Die Andrückhülse 12 ist vorzugsweise dünnwandig ausgebildet, da für bestimmte Bohrungen der Außendurchmesser dieser Hülse 12 in eine Pilotbohrung (Vorbohrung) eines ersten Bauteils passen muß und gleichzeitig der Bohrer 5 innerhalb der Andrückhülse 12 während des Bohrvorganges in Bohrvorschubrichtung verschoben wird. Die Andrückhülse 12 weist Luftöffnungen auf, um eine ausreichende Luftzirkulation für die Späneabsaugung und damit einen axialen Spänetransport in Richtung Späneabsaugrohr 8A zu erreichen. Die Luftöffnungen sind dabei so ausgebildet, daß die Späne nicht in radialer Richtung austreten können (Einzelheiten siehe in Fign. 3 und 4). Zur Unterstützung der Luftzirkulation können in einer bevorzugten Ausgestaltung im konischen Hülsenteil 11 b der Außenhülse 11 Bypassbohrungen 14 vorgesehen sein. Weiterhin ist es möglich, im Inneren der Innenhülse 6 einen Luftkanal 15 anzuordnen, der dem Querschnitt des Absaugrohres 8 angepaßt ist. Mit einer solchen Weiterbildung kann der sogenannte Zyklon-Effekt verhindert werden, d.h. es wird eine Senkung der Strömungsgeschwindigkeit der Luft und ein Ausfällen der Späne verhindert.

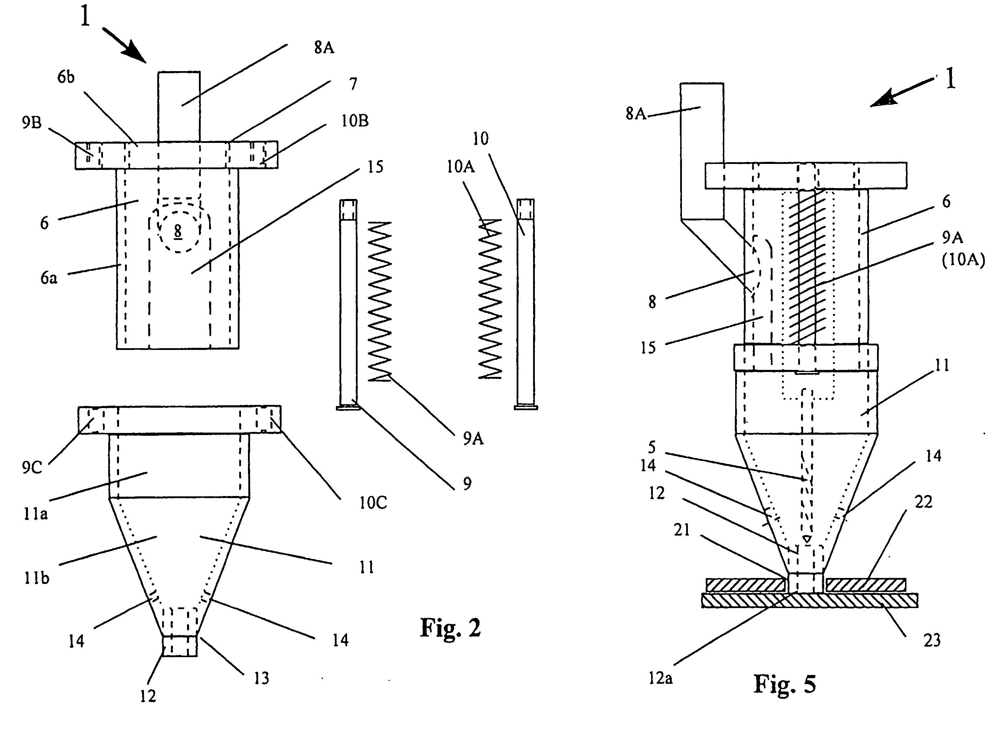

Zum weiteren Erläuterung sind in der Fig. 2 die Einzelteile der Bohreinrichtung 1 gezeigt. Es ist ersichtlich, daß die Innenhülse 6 aus einem dünnwandigen, zylindrischen Führungsrohr 6a besteht, welches das Bohrfutter 4 und das Bohrwerkzeug 5 der Bohrmaschine 3 umhüllen kann. Die Späneabsaugung 8 ist durch eine Öffnung im Führungsrohr 6a gebildet, an die das Späneabsaugrohr 8A angeschlossen ist. Im wesentlichen in Bohrerlängsrichtung ist im Führungsrohr 6a der Luftkanal 15 eingebracht. Am Führungsrohr 6a ist ein Aufnahmeteil 6b angeordnet, welches für den Anschluß an die Bohrmaschine 3 die bereits genannte Gewindeaufnahme 7 umfaßt. Am Aufnahmeteil 6b sind weiterhin Bolzenaufnahmen 9B und 10B vorgesehen, in denen die Führungsbolzen 9 bzw. 10 eingeschraubt und gehalten werden können. Jedem Führungsbolzen 9 bzw. 10 ist eine Spiralfeder 9A bzw. 10A zugeordnet. Die Außenhülse 11, bestehend aus dem zylindrischen hinteren Hülsenteil 11a und dem konisch geformten vorderen Hülsenteil 11b, weist weiterhin zur Führung und Aufnahme der Führungsbolzen 9 bzw. 10 Bolzenführungen 9C bzw. 10C auf. Damit ist mittels der federbelasteten Führungsbolzen 9 bzw. 10 die Außenhülse 11 in Bohrerlängsrichtung relativbeweglich zur Innenhülse 6. Wie bereits schon zur Fig. 1 ausgeführt, ist am vorderen Ende der Außenhülse 11 die Aufnahme 13 für die Andrückhülse 12 angeordnet. Zwei mögliche Ausgestaltungen einer Andrückhülse 12 sind nachfolgend in den Fign. 3 und 4 gezeigt.

In Fig. 3 ist eine erste Ausgestaltung der Andrückhülse 12 in einer Draufsicht und einer Seitenansicht in vergrößerter Darstellung ersichtlich. Es ist erkennbar, daß die bereits genannten Luftöffnungen in der Hülse 12, die zur ausreichenden Luftzirkulation notwendig sind, hier als Löcher 16 ausgebildet sind. Die Hülse 12 ist dünnwandig ausgebildet, vorzugsweise mit einer Wanddicke von ca. 0,1 bis 0,15 mm. Die in der gezeigten Ausführung regelmäßig am Umfang verteilten Bohrungen mit einem Durchmesser von beispielhaft ca. 0,3 mm müssen eine solche Luftzirkulation ermöglichen, daß die Absaugluft, die in Richtung Absaugrohr 8A strömt, die Späne in axialer Richtung transportieren kann. Die Bohrungen müssen somit für eine entsprechende Luftversorgung ausreichend groß und in ausreichender Anzahl vorhanden sein. Die Größe der Bohrungen ist dadurch beschränkt, daß Bohrspäne, die während des Arbeitsprozesses anfallen und abgesaugt werden, nicht in radialer Richtung austreten können und eventuell die Löcher 16 verstopfen.

In Fig. 4 ist eine zweite Ausführungsform der Andrückhülse 12 in einer vergrößerten Darstellung einer Drauf- und einer Seitenansicht ersichtlich. In dieser Ausführung der Andrückhülse 12 sind die Luftöffnungen mittels eines in Längsrichtung verlaufenden Spaltes 17 gebildet. Der Spalt 17 ergibt sich durch eine Überlappung 18 von den Materialenden (Flanken 19 und 20) der Mantelfläche der Andrückhülse 12. Der Überlappungsbereich 18 wird so gewählt, daß eine Luftströmung in die Hülse 12 einen Spänetransport in axialer Richtung unterstützt, in radialer Richtung jedoch keine Späne austreten bzw. Öffnungen verstopfen können. Dafür verläuft das Ende der inneren Flanke 19 in Drehrichtung des Bohrers 5, die äußere Flanke 20 endet entgegen der Drehrichtung des Bohrers 5. Es ist damit sichergestellt, daß der Spalt 17 eine Lufteintrittsströmung gewährleistet, die der Drehrichtung des Bohrers 5 entspricht. Wie auch schon zur ersten Ausführungsform ausgeführt, ist die Hülse 12 der zweiten Ausführungsform dünnwandig ausgebildet, d.h. beispielsweise mit einer Wanddicke von ca. 0,15 mm bei einer Hülsengröße von ca. 20 mm Länge und einem Durchmesser von ca. 4 mm.

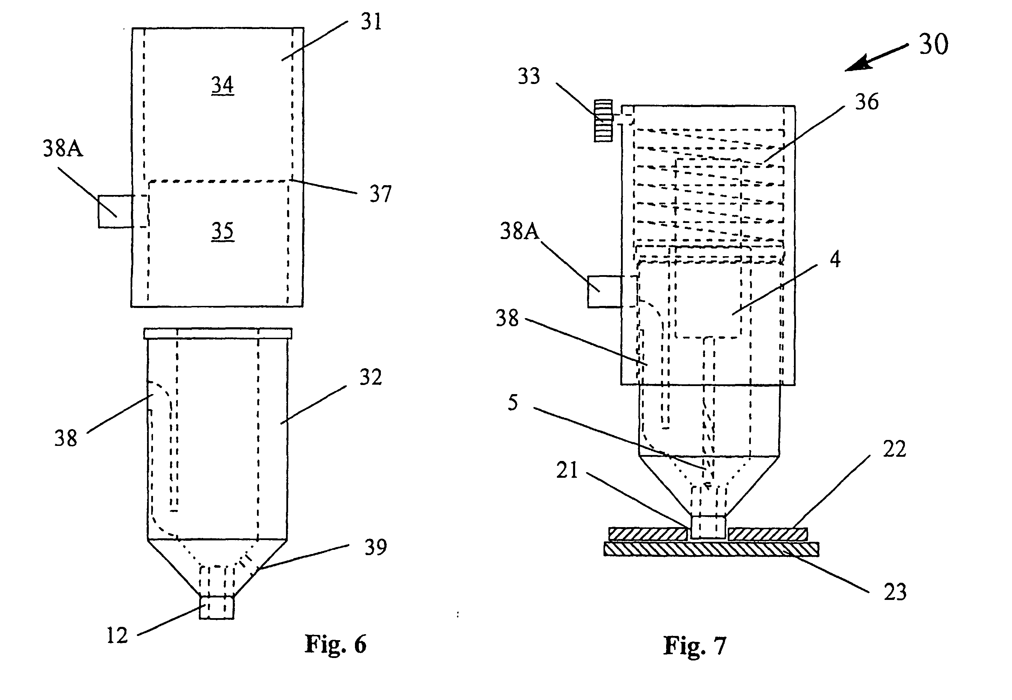

In Fig. 5 ist die erfindungsgemäß verwendete Bohreinrichtung 1 in Arbeitsposition ersichtlich. Die Bohreinrichtung 1 als Aufsatz auf eine üblicherweise bekannte Bohrmaschine (nicht gezeigt) wird mit der Andrückhülse 12 in eine vorhandene Pilotbohrung (Vorbohrloch) 21 eines ersten Bleches 22 eingeführt, um am zweiten Blech 23 eine Bohrung auszuführen. Der Außendurchmesser der Pilotbohrung liegt in einem Bereich von ca. 2,8 bis 5,2 mm für die speziell in der Flugzeugrumpfmontage herzustellenden Nietverbindungen. Es sind natürlich auch andere Durchmesserbereiche möglich, wobei in der Auslegung der Bohreinrichtung 1 die Belastbarkeit der Andrückhülse 12 sowie die notwendigen Kräfte (Spankräfte, Andrückkräfte) zu beachten ist. Die Bohreinrichtung 1 ist so aufgebaut, daß die während des Bohrvorganges entstehenden Spankräfte immer kleiner sind als die Andrückkraft, mit der die Andrückhülse 12 an das Bauteil 23 gedrückt wird. Die Andrückhülse 12 wird mit ihrer Stirnfläche 12a mit einer Kraft F1 gegen das ungebohrte Bauteil 23 gedrückt, bevor der Zerspanungsprozess durchgeführt werden kann. Dieses wird durch die in die Bohreinrichtung 1 integrierten Federn 9A, 10A sichergestellt. Bei einer Bohrvorschubbewegung wird zunächst die Außenhülse 11 mit der Andrückhülse 12 an das Bauteil 23 gedrückt. Nach Überwindung der Federkraft wird die Innenhülse 6, die fest mit der Bohrmaschine verbunden ist und den Bohrer 5 umhüllt, in Richtung Bohrstelle bewegt, der Bohrer 5 setzt an der Bohrstelle an und der Bohrvorgang wird durchgeführt. Gleichzeitig wird eine Relativbewegung zwischen Innenhülse 6 und Außenhülse 11 bewirkt. Aufgrund dieser Relativbewegung werden die Spiralfedern 9A und 10A so belastet, daß die während des Bohrvorganges entstehenden Spankräfte F2 immer kleiner sind als die Andrückkraft F1.
Dadurch ist sichergestellt, daß sich keine Bohrspäne in der Fügefläche zwischen den Bauteilen 22 und 23 ansammeln können. Damit kann das Auseinanderfahren, Entgraten, Reinigen, Zusammenfahren und Heften der Bauteile nach dem Abbohren der Heftbohrungen entfallen.

In der beschriebenen Ausführungsform ist die erfindungsgemäß verwendete Bohreinrichtung an überlappenden Blechen eingesetzt. Neben der Bearbeitung von metallischen Werkstoffen kann diese Bohreinrichtung auch bei einer spanenden Bearbeitung von anderen Werkstoffen eingesetzt werden. Beispielsweise ist es möglich, Leichtbauwerkstoffe und Verbundwerkstoffe (Faserverbundwerkstoffe wie Kohlefaserverbundwerkstoffe oder Glasfaser/Aluminium-Laminat) zu bohren, wobei der entstehende Staub und Faserreste mittels der Späneabsaugung 8 entfernt werden.

Um einen Spänestau (bzw. Stau von Faserresten und Staubansammlungen) in der Bohreinrichtung 1 zu verhindern, ist die Späneabsaugung 8 während des Bohrvorganges aktiv. Mittels Saugluft werden die Späne in axialer Richtung von der Bohrstelle weg in das Späneabsaugrohr 8A befördert. Da die Andrückhülse 12 fest um die Bohrstelle aufgesetzt ist, müssen für eine ausreichende Luftzirkulation Luftöffnungen in der Andrückhülse 12 vorhanden sein, die in Saugrichtung den Spänetransport unterstützen, ohne daß dabei in radialer Richtung Späne austreten können. Mögliche Ausgestaltungen solcher Luftöffnungen in der Andrückhülse 12 sind den Fign. 3 und 4 zu entnehmen. Zur weiteren Unterstützung der Luftzirkulation können auch in der Außenhülse 11 Bypassbohrungen 14 vorgesehen sein, wobei bevorzugt diese Bypassbohrungen im konischen vorderen Hülsenteil 11b angeordnet sind. Für eine weitere Verbesserung der Absaugung von Bohrspänen ist es möglich, im Inneren der feststehenden Innenhülse 6 einen Luftkanal 15 vorzusehen, der dem Querschnitt des Absaugrohres 8A angepaßt ist, um den sogenannten Zyklon - Effekt zu verhindern (Senkung der Strömungsgeschwindigkeit der Luft, Ausfällen der Späne).

In den Fign. 6 und 7 ist eine zweite Ausführungsform 30 der erfindungsgemäß verwendeten Bohreinrichtung gezeigt. In dieser Ausführungsform ist ebenfalls eine federbelastete Relativbewegung zwischen einer Innenhülse 32 sowie einer Außenhülse 31 realisiert, um die erforderliche Andrückkraft für die Andrückhülse 12 zu erzielen und den Bohrer 5 durch die Andrückhülse 12 hindurch zur Bohrstelle zu führen und das Bohren auszuführen. Im Gegensatz zur ersten Ausführungsform 1 der Bohreinrichtung ist die bohrmaschinenseitige Hülse jedoch als Außenhülse 31 und die die Andrückhülse 12 aufnehmende Hülse als Innenhülse 32 ausgebildet. Das bietet den Vorteil, daß statt außerhalb der Hülsen 6 und 11 (siehe Fig. 1) angeordnete Führungsbolzen 9 und 10 eine innenliegende Führung zwischen Außenhülse 31 und Innenhülse 32 realisiert ist. Damit ist die Anzahl der notwendigen Einzelteile reduziert, ein Platzgewinn erzielt und die Verschmutzungsanfälligkeit reduziert.
Der genaue Aufbau und die Wirkungsweise der Bohreinrichtung 30 wird nachfolgend beschrieben. In Fig. 6 sind die zwei wesentlichen Bestandteile: die feststehende Außenhülse 31 sowie die bewegliche Innenhülse 32, wobei an die Innenhülse 32 die Andrückhülse 12 angeordnet ist, jeweils als Einzelheit dargestellt. Die Außenhülse 31 weist ein Aufnahmeteil 34 auf, mittels dem eine Befestigung an der Bohrmaschine erfolgen kann. Das Aufnahmeteil 34 ist dafür so ausgebildet, daß es auf den vorderen Teil der Bohrmaschine aufgeschoben werden kann und im Hohlraum der Außenhülse 31 noch ausreichend Platz für das Hindurchführen des Bohrers 5 und des Bohrfutters bzw. der Spannzange 4 vorhanden ist. Mittels einer Klemmschraube 33 kann eine Fixierung der Außenhülse 31 an der Bohrmaschine erreicht werden. Möglich ist es auch (in einer nicht gezeigten Ausführungsform), am Aufnahmeteil 31 oder dem Aufnahmebereich der Bohrmaschine Sicherungselemente gegen ein Verdrehen vorzusehen. Eine dem Innendurchmesser des Aufnahmeteils 34 angepaßte Spiralfeder 36 ist in die Außenhülse 31 eingebracht, um eine bewegliche Innenhülse 32 federbelastet relativbewegbar auszuführen. Eine Fixierung der Innenhülse 32 in Bohrrichtung ist mittels eines Anschlages 37 in der Außenhülse 31 erreicht. Die Führung der Innenhülse 32 innerhalb der Außenhülse 31 ist entlang des zylinderförmigen Aufnahmeteiles 35 möglich, so daß die Bewegung der Innenhülse in Bohrvorschubrichtung einerseits durch die Feder 36 und andererseits durch den Anschlag 37 begrenzt ist. Im Vorderteil der Innenhülse 32 ist die Andrückhülse 12 angeordnet. Im Mantelbereich der Innenhülse 32 ist ein Absaugkanal 38 vorgesehen, der während des Bohrvorganges Bohrspäne von der Bohrspitze weg in Richtung des in der Außenhülse 31 vorgesehenen Anschlusses 38A für das Absaugrohr transportiert. Zur weiteren Verbesserung der Luftzufuhr während des Absaugvorganges ist zumindest eine Bypassbohrung 39 im vorderen konischen Bereich der Innenhülse 32 vorgesehen.

In Fig. 7 ist die Bohreinrichtung 30 in Arbeitsposition ersichtlich, wobei die Andrückhülse 12 in das Vorbohrloch 21 eines ersten Bleches 22 eingeführt ist, um am zweiten Blech 23 eine Bohrung ausführen zu können. Wie schon zur ersten Ausführungsform 1 erläutert, ist die Bohreinrichtung 30 so ausgelegt, daß die während des Bohrvorganges entstehenden Spankräfte immer kleiner sind als die Andrückkraft, mit der die Andrückhülse 12 an das Bauteil 23 gedrückt wird. Die Andrückkraft wird mit der Feder 36 realisiert. Bei einer Bohrvorschubbewegung wird zunächst die mit der Innenhülse 32 verbundene Andrückhülse 12 an das Bauteil 23 gedrückt. Nach Überwindung der Federkraft wird die Außenhülse 31, die fest mit der Bohrmaschine verbunden ist und das Bohrfutter 4 sowie teilweise den Bohrer 5 umhüllt, in Bohrvorschubrichtung bewegt und der Bohrer 5 verläuft durch die Andrückhülse 12 hindurch, setzt am Bauteil 23 an und der eigentliche Bohrvorgang läuft ab. Gleichzeitig wird eine Relativbewegung zwischen Innenhülse 32 und Außenhülse 31 bewirkt. Aufgrund dieser Relativbewegung wird die Spiralfeder 36 so belastet, daß die während des Bohrvorganges entstehenden Spankräfte immer kleiner sind als die Andrückkraft. Dadurch ist sichergestellt, daß sich keine Bohrspäne in der Fügefläche zwischen den Bauteilen 22 und 23 ansammeln können.
Um einen Spänestau in der Bohreinrichtung 30 zu verhindern, werden mittels Saugluft die Späne oder Staub und Faserreste in axialer Richtung von der Bohrstelle weg in das Späneabsaugrohr 38A befördert. Vorzugsweise ist dafür ein Absaugkanal 38 in der Innenhülse 32 vorgesehen. Da die Andrückhülse 12 fest um die Bohrstelle aufgesetzt ist, müssen für eine ausreichende Luftzirkulation Luftöffnungen in der Andrückhülse 12 vorhanden sein, die in Saugrichtung den Spänetransport unterstützen, ohne daß dabei in radialer Richtung Späne austreten können. Mögliche Ausgestaltungen solcher Luftöffnungen in der Andrückhülse 12 sind bereits in den Fign. 3 und 4 gezeigt. Zur weiteren Unterstützung der Luftzirkulation ist bzw. sind die in der Innenhülse 32 vorgesehene(n) Bypassbohrung(en) 39 vorteilhaft.

### Bezugszeichen

- 1 -: Bohreinrichtung
- 2 -: Bohrvorrichtung
- 3 -: Bohrmaschine
- 4 -: Bohrfutter
- 5 -: Bohrer
- 6 -: feststehende Innenhülse
- 6a -: Führungsrohr
- 6b -: Aufnahmeteil
- 7 -: Gewindeaufnahme
- 8 -: Späneabsaugung
- 8A -: Absaugrohr
- 9, 10 -: Führungsbolzen
- 9A, 10A -: Spiralfedern
- 9B, 10B -: Bolzenaufnahme
- 9C, 10C -: Bolzenführungen
- 11 -: bewegliche Außenhülse
- 11a -: hinteres Hülsenteil (zylindrisch)
- 11b -: vorderes Hülsenteil (konisch)
- 12 -: Andrückhülse
- 12a -: Stirnfläche der Andrückhülse 12
- 13 -: Aufnahme für Andrückhülse
- 13a -: innerer Anschlag
- 13b -: Halteteil
- 14 -: Bypassbohrungen
- 15 -: Luftkanal
- 16 -: Löcher in Andrückhülse 12
- 17 -: Schlitz (Spalt) in Andrückhülse 12
- 18 -: Überlappungsbereich
- 19, 20 -: Flanken
- 21 -: Pilotbohrung (Vorbohrung)
- 22 -: erstes Bauteil
- 23 -: zweites Bauteil

- 30 -: zweite Ausführungsform der Bohreinrichtung
- 31 -: feststehende Außenhülse
- 32 -: bewegliche Innenhülse
- 33 -: Klemmschraube
- 34 -: Aufnahmeteil für Bohrmaschine (in 31)
- 35 -: Aufnahmeteil für Innenhülse (in 31)
- 36 -: Feder
- 37 -: Anschlag in der Außenhülse
- 38 -: Absaugkanal
- 38A -: Absaugrohr
- 39 -: Bypassbohrung

## Patentansprüche

1. Verwendung einer Bohreinrichtung (1; 30) zum Anschluss an eine Bohrmaschine (3) mit einem Bohrwerkzeug (5) für das Erzeugen von Bohrungen in überlappenden Bauteilen (22, 23),
- wobei ein erstes Bauteil (22) eine Vorbohrung (21) aufweist und die Bohreinrichtung (1;30) durch die Vorbohrung (21) des ersten Bauteils (22) hindurch auf der Oberfläche des zweiten Bauteils (23) aufsetzbar ist,
- die Bohreinrichtung (1) ein bohrmaschinenseitiges Element (6; 31) und ein bauteilseitiges Element (11; 32) aufweist, die in Wirkverbindung stehen zur Erzeugung einer Relativbewegung in Bohrvorschubrichtung,
- das bauteilseitige Element (11; 32) über eine Andrückhülse (12) verfügt, welche dünnwandig ausgebildet ist, um einerseits das Aufsetzen der Andrückhülse (12) durch die Vorbohrung auf der Oberfläche des zweiten Bauteils (23) zu ermöglichen sowie andererseits ein Hindurchführen des Bohrwerkzeuges (5) durch die Andrückhülse (12) und das Zerspanen des zweiten Bauteiles (23) vorzusehen und
- in der Bohreinrichtung (1) Mittel zum Entfernen von Spänen oder Staub (8, 8A; 38, 38A; 16; 17) vorgesehen sind.

2. Verwendung einer Bohreinrichtung nach Anspruch 1, **dadurch gekennzeichnet, daß** das bohrmaschinenseitige Element (6) als feststehende Innenhülse (6) ausgebildet ist und über Führungsbolzen (9, 10) mit dem bautellseitigen, als Außenhülse (11) ausgebildeten beweglichen Element in Wirkverbindung steht, um eine Relativbewegung in Bohrvorschubrichtung zu erzeugen

3. Verwendung einer Bohreinrichtung nach Anspruch 1, **dadurch gekennzeichnet, daß** das bohrmaschinenseitlge Element als feststehende Außenhülse (31) ausgebildet ist, die ein Aufnahmeteil (35) zur Aufnahme des bauteilseitigen, als Innenhülse (32) äusgebildeten beweglichen Elements aufweist, um eine Relativbewegung in Bohrvorschubrichtung zu erzeugen.

4. Verwendung einer Bohreinrichtung nach einem der Ansprüche 1 bis 3, **dadurch gekennzeichnet, daß** als Mittel zum Entfernen von Spänen oder Staub eine Öffnung (8; 38A) in dem bohrmaschinenseitigen Element (6; 31) sowie ein daran angeschlossenes Absaugrohr (8A; 38A) vorgesehen ist, wobei zum Erhalt der Luftzirkulation Luftöffnungen (16, 17) in die Andrückhülse (12) eingebracht sind.

5. Verwendung einer Bohreinrichtung nach Anspruch 4, **dadurch gekennzeichnet, daß** Luftöffnungen in der Andrückhülse (12) mittels am Umfang verteilter Löcher (16) realisiert sind, wobei die Löcher (16) nur eine solche Größe aufweisen, das keine Bohrspäne in radialer Richtung aus der Andrückhülse (12) austreten können.

6. Verwendung einer Bohreinrichtung nach einem der Ansprüche 4 oder 5, **dadurch gekennzeichnet, daß** Luftöffnungen in der Andrückhülse (12) mittels einen durch überlappende Flanken (19, 20) der Mantelfläche der Andrückhülse (12) gebildeten Spalt (17) realisiert ist, wobei die Luftströmung durch den Spalt (17) in das Innere der Andrückhülse (12) in Drehrichtung des Bohrwerkzeuges (5) erfolgt

7. Verwendung einer Bohreinrichtung nach einem der Ansprüche 1 bis 6, **dadurch gekennzeichnet, daß** zur Unterstützung der Luftzirkulation Bypassbohrungen (14; 39) in dem bauteitseitigen Element (11; 32) vorgesehen sind.

8. Verwendung einer Bohreinrichrung eines nach einem der Ansprüche 1 bis 7, **dadurch gekennzeichnet, daß** in einem Element (6; 32) ein Luftkanal (15; 38) vorgesehen ist, der dem Querschnitt der Öffnung (8; 38A) zum Absaugrohr (8A; 38A) angepaßt ist.

9. Verwendung einer Bohreinrichtung nach einem der vorangegangenen Ansprüche in einer Bohrvorrichtung (2) als Vorsatz vor einer Bohrmaschine (3), wobei über eine Gewindeaufnahme (7) das bohrmaschinenseitige Element (6) an der Bohrmaschine (3) befestigbar ist und das bohrmaschinenseitige Element (6) zumindest teilweise das Bohrwerkzeug (5) umhüllt.

10. Verwendung einer Bohreinrichtung nach einem der vorangegangenen Ansprüche in einer Bohrvorrichtung (2) als Vorsatz vor einer Bohrmaschine (3), wobei über eine Aufnahme (34) die bohrmaschinenseidge Hülse (31) an der Bohrmaschine (3) befestigbar ist, vorzugsweise fixierbar mittels einer Verdrehsicherung (33).

11. Verfahren zum Erzeugen von Bohrungen in überlappenden Bauteilen insbesondere Bleche (22, 23),
- wobei das erste Bauteil (22) zumindest bereichsweise oberhalb des zweiten Bauteils (23) positioniert wird und der überlappende Bereich einen Fügebereich bildet,
- eine Vorbohrung (21) im ersten Bauteil (22) vorhanden ist und eine an einer Bohreinrichtung (1) angeordnete Andrückhülse (12) in das Vorbohrloch (21) eingeführt wird,
- die Andrückhülse (12) mit einer Andrückkraft an das zweite Bauteil (23) gedrückt wird,
- ein Bohrwerkzeug (5) durch die Bohreinrichtung (1) mit Andrückhülse (12) durchgeführt wird,
- mit dem Bohrwerkzeug (5) das Bohrlochim zweiten Bauteil (23) gebohrt wird, wobei die während des Bohrvorganges entstehenden Spankräfte immer kleiner als die Andrückkraft sind und gleichzeitig während des Bohrvorganges die entstehenden Späne entfernt werden.

12. Verfahren nach Anspruch 11, **dadurch gekennzeichnet, dass**
die Entfernung der Späne durch Absaugen realisiert wird, wobei mittels Luftöffnungen (14, 16, 17; 39) in der Andrückhülse (12) und/oder in dem bauteilseitigen Element (11; 32) der Bohreinrichtung (1) eine Luftströmung zur Bohrstelle hin realisiert wird.

## Claims

1. Use of a boring apparatus (1; 30) for connecting to a boring machine (3) having a drilling tool (5) for producing bores in overlapping components (22, 23),
- wherein a first component (22) has an initial bore (21) and the boring apparatus (1; 30) can be introduced through the initial bore (21) of the first component (22) and placed on the surface of the second component (23),
- the boring apparatus (1) has an element (6; 31) on the boring machine side and an element (11; 32) on the component side which are actively connected to produce a relative displacement in the drilling forward feed direction,
- the element (11; 32) on the component side has a contact sleeve (12) of a thin-walled design, firstly to enable the contact sleeve (12) to be introduced through the initial bore and placed on the surface of the second component (23) and, secondly, to enable the drilling tool (5) to be introduced through the contact sleeve (12) and cut material from the second component (23) and
- means are provided in the boring apparatus (1) for removing cuttings or dust (8; 8A; 38, 38A; 16,17).

2. Use of a boring apparatus as claimed in claim 1, **characterised in that** the element (6) on the boring machine side is a stationary inner sleeve (6) and is actively connected to the displaceable element on the component side provided as an outer sleeve (11) by means of guide bolts (9, 10) in order to produce a relative displacement in the drilling forward feed direction.

3. Use of a boring apparatus as claimed in claim 1, **characterised in that** the element on the boring machine side is a stationary outer sleeve (31) with a mounting part (35) for accommodating the displaceable element on the component side provided as an inner sleeve (32) in order to produce a relative displacement in the drilling forward feed direction.

4. Use of a boring apparatus as claimed in one of claims 1 to 3, **characterised in that** the means provided for removing cuttings or dust is an orifice (8; 38A) in the element (6; 31) on the boring machine side and a suction pipe (8A; 38A) connected to it, air orifices (16, 17) being provided in the contact sleeve (12) to produce the air circulation.

5. Use of a boring apparatus as claimed in claim 4, **characterised in that** air orifices are provided in the contact sleeve (12) in the form of holes (16) distributed around the circumference, the size of which holes (16) is limited to ensure that no drill cuttings can escape from the contact sleeve (12) in the radial direction.

6. Use of a boring apparatus as claimed in one of claims 4 or 5, **characterised in that** air orifices are provided in the contact sleeve (12) by means of a gap (17) formed by overlapping ends (19, 20) of the casing surface of the contact sleeve (12), as a result of which air flows through the gap (17) into the interior of the contact sleeve (12) in the direction of rotation of the drilling tool (5).

7. Use of a boring apparatus as claimed in one of claims 1 to 6, **characterised in that** bypass bores (14; 39) are provided in the element (11; 32) on the component side as a means of assisting the air circulation.

8. Use of a boring apparatus as claimed in one of claims 1 to 7, **characterised in that** an air passage (15; 38) is provided in an element (6; 32) which is adapted to the cross-section of the orifice (8; 38A) to the suction pipe (8A; 38A).

9. Use of a boring apparatus as claimed in one of the preceding claims in a boring device (2) constituting an attachment in front of a boring machine (3), in which case the element (6) on the boring machine side can be attached to the boring machine (3) by means of a threaded mount (7) and the element (6) on the boring machine side at least partially encases the drilling tool (5).

10. Use of a boring apparatus as claimed in one of the preceding claims in a boring device (2) constituting an attachment in front of a boring machine (3), in which case the sleeve (31) on the boring machine side can be attached to the boring machine (3) by means of a mount (34) and can preferably be fixed by means of an anti-rotation lock (33).

11. Method of producing bores in overlapping components, in particular metal sheets (22, 23),
- whereby the first component (22) is positioned with at least certain regions above the second component (23) and the overlapping region forms a joint region,
- an initial bore (21) is provided in the first component (22) and a contact sleeve (12) disposed on the boring apparatus (1) is introduced into the initial bore (21),
- the contact sleeve (12) is pressed onto the second component (23) with a pressing force,
- a drilling tool (5) is inserted through the boring apparatus (1) incorporating the contact sleeve (12),
- the bore is drilled in the second component (23) by the drilling tool (5) and the cutting forces generated during the drilling process are always smaller than the contact force and the cuttings generated during the drilling process are simultaneously removed.

12. Method as claimed in claim 11, **characterised in that** the cuttings are removed by suction and an air circulation to the boring point is created by air orifices (14, 16, 17; 39) in the contact sleeve (12) and/or in the element (11; 32) on the component side of the boring apparatus (1)

## Revendications

1. Utilisation d'un dispositif de perçage (1; 30) à connecter à une machine de perçage (3) avec un outil de perçage (5) pour réaliser des trous dans des pièces (22, 23) qui se chevauchent,
- une première pièce (22) présentant un avant-trou (21) et le dispositif de perçage (1; 30) pouvant être appliqué contre la surface de la deuxième pièce (23) à travers l'avant-trou (21) dans la première pièce (22),
- le dispositif de perçage (1) présentant un élément (6; 31) côté machine de perçage et un élément (11; 32) côté pièce qui coopèrent l'un avec l'autre pour produire un déplacement relatif dans la direction d'avance,
- l'élément (11; 32) côté pièce comportant une douille de pression (12) à paroi mince pour d'une part permettre le positionnement de la douille de pression (12) sur la surface de la deuxième pièce à travers l'avant-trou et d'autre part permettre l'introduction de l'outil de perçage (5) dans la douille de pression (12) et l'usinage de la deuxième pièce (23),
- des moyens pour éliminer les copeaux ou la poussière (8, 8A; 38, 38A; 16, 17) étant prévus dans le dispositif de perçage (1).

2. Utilisation d'un dispositif de perçage selon la revendication 1, **caractérisé par le fait que** l'élément (6) côté machine de perçage est conformé en douille intérieure (6) fixe et coopère avec l'élément mobile conformé en douille extérieure (11) côté pièce, aux fins de produire un déplacement relatif dans la direction d'avance.

3. Utilisation d'un dispositif de perçage selon la revendication 1, **caractérisé par le fait que** l'élément côté machine de perçage est conformé en douille extérieure (31) fixe qui présente une portion logement (35) destinée à recevoir l'élément mobile conformé en douille intérieure (32) côté pièce, aux fins de produire un déplacement relatif dans la direction d'avance.

4. Utilisation d'un dispositif de perçage selon une des revendications 1 à 3, **caractérisé par le fait qu'**il est prévu comme moyen pour éliminer les copeaux ou la poussière une ouverture (8; 38A) dans l'élément (6; 31) côté machine de perçage ainsi qu'un tuyau d'aspiration (8A: 38A) connecté à celle-ci, des ouvertures de passage d'air (16, 17) étant aménagées dans la douille de pression (12) aux fins d'assurer la circulation de l'air.

5. Utilisation d'un dispositif de perçage selon la revendication 4, **caractérisé par le fait que** les ouvertures de passage d'air dans la douille de pression (12) sont réalisées sous la forme de trous (16) répartis sur le pourtour les trous (16) ayant une dimension telle qu'aucun copeau de perçage ne puisse s'échapper de la douille de pression (12) dans la direction radiale.

6. Utilisation d'un dispositif de perçage selon une des revendications 4 ou 5, **caractérisé par le fait que** les ouvertures de passage d'air dans la douille de pression (12) sont réalisées au moyen d'une fente (17) obtenue par des flancs (19, 20) chevauchants de la douille de pression (12), l'écoulement de l'air à travers la fente (17) vers l'intérieur de la douille de pression (12) ayant lieu dans le sens de rotation de l'outil de perçage (5).

7. Utilisation d'un dispositif de perçage selon une des revendications 1 à 6, **caractérisé par le fait que** des trous de dérivation (14; 39) sont prévus dans l'élément (1; 32) côté pièce pour renforcer la circulation d'air.

8. Utilisation d'un dispositif de perçage selon une des revendications 1 à 7. **caractérisé par le fait qu'**il est prévu dans un élément (6; 32) un canal à air (15; 38) qui est adapté à la section de l'ouverture (8; 38A) menant au tuyau d'aspiration (8A; 38A).

9. Utilisation d'un dispositif de perçage selon une des revendications précédentes dans une installation de perçage (2), comme outil adaptable sur une machine de perçage (3), l'élément (6) côté machine de perçage étant fixé à ladite machine de perçage (3) grâce à un trou filcté et l'élément (6) côté machine de perçage entourant au moins partiellement l'outil de perçage (5).

10. Utilisation d'un dispositif de perçage selon une des revendications précédentes dans une installation de perçage (2), comme outil adaptable sur une machine de perçage (3), la douille (31) côté machine de perçage étant fixée à ladite machine de perçage (3) grâce à un logement (34), de préférence avec un blocage en rotation (33).

11. Procédé de réalisation de trous dans des pièces qui se chevauchent, notamment dans des tôles (22, 23), selon lequel
- on positionne la première pièce (22) au moins partiellement au-dessus de la deuxième pièce (23), la zone de chevauchement formant la zone d'assemblage,
- un avant-trou (21) est présent dans la première pièce (22) et on introduit dans l'avant-trou (21) une douille de pression (12) disposée sur un dispositif de perçage (1),
- on presse avec une force de pression la douille de pression (12) contre la deuxième pièce (23),
- on introduit un outil de perçage (5) dans le dispositif de perçage (1) et la douille de pression (12),
- on perce le trou dans la deuxième pièce (23) à l'aide de l'outil de perçage (5), les forces de coupe qui apparaissent au cours de l'opération de perçage étant toujours inférieures à la force de pression et les copeaux générés au cours de l'opération de perçage étant évacués.

12. Procédé selon la revendication 11. **caractérisé par le fait que** l'évacuation des copeaux est réalisée par aspiration, un écoulement d'air en direction du point de perçage étant réalisé à l'aide d'ouvertures de passage d'air (14, 16, 17; 39) dans la douille de pression (12) et/ou dans l'élément côté pièce (11, 32) du dispositif de perçage (1).
